# FASCICULE DE BREVET EUROPEEN

(11) **EP 4 272 036 B1**
(45) Date de publication et mention de la délivrance du brevet: **23.10.2024**
(21) Numéro de dépôt: 21847966.5
(22) Date de dépôt: 29.12.2021
(51) Int. Cl.: G05B 19/042, H02J 7/00, H02J 7/35, E06B 9/72, E06B 9/68

(54) **PROCÉDÉ DE COMMANDE EN FONCTIONNEMENT D'UN DISPOSITIF D'ENTRAÎNEMENT MOTORISÉ ET DISPOSITIF D'ENTRAÎNEMENT MOTORISÉ METTANT EN OEUVRE UN TEL PROCÉDÉ**
VERFAHREN ZUR STEUERUNG DES BETRIEBS EINER MOTORISIERTEN ANTRIEBSVORRICHTUNG UND MOTORISIERTE ANTRIEBSVORRICHTUNG ZUR DURCHFÜHRUNG SOLCH EINES VERFAHRENS
METHOD FOR CONTROLLING THE OPERATION OF A MOTORISED DRIVE DEVICE AND MOTORISED DRIVE DEVICE IMPLEMENTING SUCH A METHOD

(30) Priorité: 30.12.2020 FR 2014271
(43) Date de publication de la demande: 08.11.2023
(73) Titulaire: Somfy Activites SA, 74300 Cluses (FR)
(72) Inventeur: ROUSSEAU, Fabien, 74300 Cluses (FR); BRUNO, Serge, 74300 Cluses (FR); FAURE, David, 74300 Cluses (FR)
(74) Mandataire: Lavoix
(86) Numéro de dépôt international: PCT/EP2021/087810
(87) Numéro de publication internationale: WO 2022/144405

(56) Documents cités:
- EP-A1- 3 190 681
- EP-A1- 3 220 471
- EP-A2- 3 340 428
- WO-A2-2011/138556

## Description

La présente invention concerne un procédé de commande en fonctionnement d'un dispositif d'entrainement motorisé, ainsi qu'un dispositif d'entrainement motorisé configuré pour mettre en oeuvre ce procédé de commande.

De manière générale, l'invention concerne le domaine des dispositifs d'entrainement motorisé alimentés en énergie électrique par une batterie, la batterie étant chargée par une source d'énergie électrique telle qu'un panneau photovoltaïque.

Dans une installation d'occultation alimentée en énergie solaire, le panneau photovoltaïque et la batterie sont dimensionnés de manière à assurer un fonctionnement optimal du dispositif d'entrainement motorisé en période de faible ensoleillement, telle que la période hivernale. Ainsi dimensionné, le panneau photovoltaïque fournit beaucoup plus d'énergie électrique que nécessaire en période de fort ensoleillement, telle que la période estivale. Il est connu que la chaleur associée à un état de charge élevé d'une la batterie impacte considérablement le vieillissement de la batterie, réduisant ainsi la durée de vie de la batterie. La durée de vie de la batterie de l'installation d'occultation alimentée en énergie solaire est donc impactée en fonction de l'ensoleillement et, en particulier, par l'ensoleillement durant la période estivale.

En outre, selon la localisation et l'orientation du panneau photovoltaïque, celui-ci peut fournir plus d'énergie que nécessaire au fonctionnement optimal du dispositif d'entrainement motorisé tout au long de l'année.

On connaît déjà le document FR 2 966 942 A qui décrit un équipement dynamique comprenant un système dynamique, un générateur photovoltaïque, une batterie alimentée en énergie électrique par le générateur photovoltaïque et alimentant en énergie électrique le système dynamique, et un dispositif pour le pilotage de cet équipement dynamique en fonction de l'ensoleillement. Le dispositif comprend un moyen pour isoler électriquement le générateur photovoltaïque par rapport à la batterie puis mesurer la tension à vide du générateur photovoltaïque. Suite à la mesure de la tension à vide du générateur photovoltaïque, une valeur numérique correspondant à cette tension à vide mesurée est déterminée puis comparée à au moins une valeur seuil de référence. Lorsque cette valeur numérique déterminée correspond à une gamme de valeurs limitée par au moins une telle valeur seuil de référence, le système dynamique est alors piloté pour lui conférer une configuration correspondant à cette gamme de valeurs.

Cependant, ce dispositif présente l'inconvénient d'isoler électriquement le générateur photovoltaïque par rapport à la batterie au moyen d'au moins un interrupteur additionnel par rapport à un dispositif mis en oeuvre de manière logicielle, permettant de piloter l'équipement dynamique en fonction de l'ensoleillement.

En outre, l'alimentation de l'équipement dynamique par le générateur photovoltaïque repose sur la fiabilité de cet interrupteur additionnel, l'interrupteur additionnel créé, de ce fait, un nouveau risque de défaillance du fonctionnement de l'équipement dynamique.

On connaît également EP 3 340 428 A qui décrit un procédé de contrôle de la charge d'une batterie qui alimente un volet roulant, en tenant compte du rapport entre une valeur d'énergie disponible et une valeur d'énergie consommée. D'autre part, EP 3 190 681 A enseigne d'autoriser ou non la charge d'une batterie en fonction de sa température et EP 3 220 471 A enseigne de charger une batterie en tenant compte de son état de charge. On connaît également WO 2011/138556 qui décrit un procédé de contrôle de l'alimentation en énergie électrique d'une batterie appartenant à une dispositif d'occultation, au moyen d'un panneau photovoltaïque. Ces matériels connus induisent un risque de charge excessive et de vieillissement prématuré de la batterie.

La présente invention a pour but de résoudre les inconvénients précités et de proposer un procédé de commande en fonctionnement d'un dispositif d'entrainement motorisé, ainsi qu'un dispositif d'entrainement motorisé associé, permettant de piloter, efficacement et de façon fiable, la charge de la batterie, tout en limitant son vieillissement.

A cet égard, la présente invention vise, selon un premier aspect, un procédé de commande en fonctionnement d'un dispositif d'entrainement motorisé comprenant au moins un dispositif d'alimentation en énergie électrique, un actionneur électromécanique, et une unité de commande. Le dispositif d'alimentation en énergie électrique comprenant au moins une batterie et une source d'énergie électrique configurée pour charger la batterie. L'actionneur électromécanique comprend au moins un moteur électrique comprenant une pluralité de bobinages, un arbre de sortie et une unité électronique de contrôle. Le procédé comprend au moins :
- une première étape de détermination d'une valeur d'une première grandeur physique représentative du fonctionnement du dispositif d'entrainement motorisé,
- une première étape de comparaison de la valeur de la première grandeur physique par rapport à une première valeur seuil prédéterminée, et
- en fonction du résultat de la première étape de comparaison, une étape de délestage dans laquelle on alimente les bobinages du moteur électrique à partir de l'énergie électrique fournie par la batterie, tout en maintenant l'arbre de sortie immobile, si la valeur de la première grandeur physique est supérieure ou égale à la première valeur seuil prédéterminée et si aucun ordre de commande n'est reçu par l'unité électronique de contrôle provenant de l'unité de commande.

Ainsi, le procédé de commande permet de déterminer l'énergie électrique fournie à la batterie par la source d'énergie électrique, ainsi que l'énergie électrique consommée par le dispositif d'entrainement motorisé, puis en fonction de limiter l'état de charge de la batterie.

De cette manière, le procédé de commande permet de limiter l'état de charge de la batterie en fonction de l'ensoleillement, notamment pendant la période estivale où la production énergétique est très excédentaire, et de recharger pleinement la batterie avant la période hivernale de manière à assurer le fonctionnement optimal du dispositif d'entrainement motorisé dans cette période, où la production d'énergie du panneau photovoltaïque n'est pas suffisante pour assurer le fonctionnement du dispositif d'entraînement motorisé.

Par conséquent, le procédé de commande permet d'obtenir une meilleure durée de vie de la batterie et/ou d'utiliser une batterie plus standard et donc moins chère.

En outre, la mise en oeuvre du procédé de commande dans lequel la régulation de l'état de charge de la batterie est effectuée de manière logicielle permet de minimiser les coûts d'obtention du dispositif d'entrainement motorisé.

Selon des aspects avantageux et non obligatoires de l'invention un tel procédé peut incorporer une ou plusieurs des caractéristiques suivantes, prises selon toute combinaison techniquement admissible :
- La première étape de détermination comprend :
   - une première sous-étape de détermination d'une valeur d'un apport d'énergie électrique de de la source d'alimentation en énergie électrique vers la batterie pendant une période de temps prédéterminée,
   - une deuxième sous-étape de détermination d'une valeur de consommation d'énergie électrique de l'actionneur électromécanique pendant la période de temps prédéterminée
   - une troisième sous-étape de détermination de la valeur de la première grandeur physique représentative du fonctionnement du dispositif d'entrainement motorisé par le calcul de la différence entre la valeur de consommation d'énergie électrique déterminée à la deuxième sous-étape et de la valeur de l'apport d'énergie électrique déterminée à la première sous-étape.
- Le procédé comprend, en outre :
   - une deuxième étape de détermination d'une valeur d'une deuxième grandeur physique représentative du fonctionnement du dispositif d'entrainement motorisé, et
   - une deuxième étape de comparaison de la valeur de la deuxième grandeur physique par rapport à une deuxième valeur seuil prédéterminée,
alors que l'étape de délestage est mise en oeuvre également en fonction du résultat de la deuxième étape de comparaison.
- La deuxième étape de détermination comprend une première sous-étape de détermination d'une valeur d'état de charge de la batterie.
- La première sous-étape de détermination d'une valeur de l'apport d'énergie électrique est identique à la première sous-étape de détermination d'une valeur d'état de charge de la batterie.
- L'étape de délestage comprend en outre une sous-étape de commande du moteur électrique selon un rapport cyclique de commutation prédéterminé de commutateurs électroniques configurés pour alimenter en énergie électrique le moteur électrique.
- L'étape de délestage est mise en oeuvre en alimentant les trois phases du moteur électrique qui est triphasé, alors qu'une phase est en parallèle avec les deux autres phases qui sont connectées en série.
- L'étape de délestage est mise en oeuvre en alimentant deux phases en parallèle du moteur électrique qui est triphasé, alors que la troisième phase est court-circuitée.
- L'étape de délestage est mise en oeuvre selon une fréquence prédéterminée de commutation des commutateurs électroniques, la fréquence prédéterminée étant dans une plage de valeurs entre 10kHz et 50kHz.

L'invention vise, selon un deuxième aspect, un dispositif, d'entrainement motorisé comprenant au moins un dispositif d'alimentation en énergie électrique, un actionneur électromécanique et une unité de commande. Le dispositif d'alimentation en énergie électrique comprenant au moins une batterie et une source d'énergie électrique configurée pour charger la batterie. L'actionneur électromécanique comprend au moins un moteur électrique comprenant une pluralité de bobinages, un arbre de sortie et une unité électronique de contrôle. Selon l'invention, l'unité électronique de contrôle (15) est configurée pour mettre en oeuvre le procédé mentionné ci-dessus.

Ce dispositif d'occultation présente des caractéristiques et avantages analogues à ceux décrits précédemment, en relation avec le procédé de commande en fonctionnement d'un dispositif d'entrainement motorisé selon l'invention.

Selon une caractéristique avantageuse de l'invention, le moteur électrique (16) est de type sans balais à commutation électronique.

Selon une autre caractéristique avantageuse de l'invention, la source d'énergie électrique (25) est un panneau photovoltaïque.

Finalement, l'invention concerne aussi un programme ou un algorithme de commande en fonctionnement d'un dispositif d'entrainement motorisé apte à employer un moteur comme moyen physique de régulation d'énergie électrique dans une installation comprenant un dispositif d'entrainement motorisé alimenté en énergie électrique par un dispositif d'alimentation en énergie électrique autonome.

D'autres particularités et avantages de l'invention apparaîtront encore dans la description ci-après, faite en référence aux dessins annexés, et donnée à titre d'exemple non limitatif :
[Fig.1] la figure 1 est une vue schématique en coupe transversale d'une installation conforme à un mode de réalisation de l'invention ;
[Fig.2] la figure 2 est une vue schématique en perspective de l'installation illustrée à la figure 1 ;
[Fig.3] la figure 3 est une vue schématique en coupe axiale et partielle de l'installation illustrée aux figures 1 et 2, montrant un actionneur électromécanique de l'installation ;
[Fig.4] la figure 4 est un schéma électrique de l'actionneur électromécanique illustré à la figure 3, comprenant un moteur électrique et une unité électronique de contrôle ;
[Fig.5] la figure 5 est un exemple de signaux d'alimentation d'un moteur triphasé dont les phases sont connectées en triangle, le moteur étant alimenté dans un premier mode, puis plus alimenté dans un deuxième mode, puis alimenté pour délester la batterie sans tourner dans un troisième mode.
[Fig.6] la figure 6 est un schéma blocs d'un algorithme d'un procédé conforme à l'invention, de commande en fonctionnement du dispositif d'entrainement motorisé illustré aux figures 1 à 3.

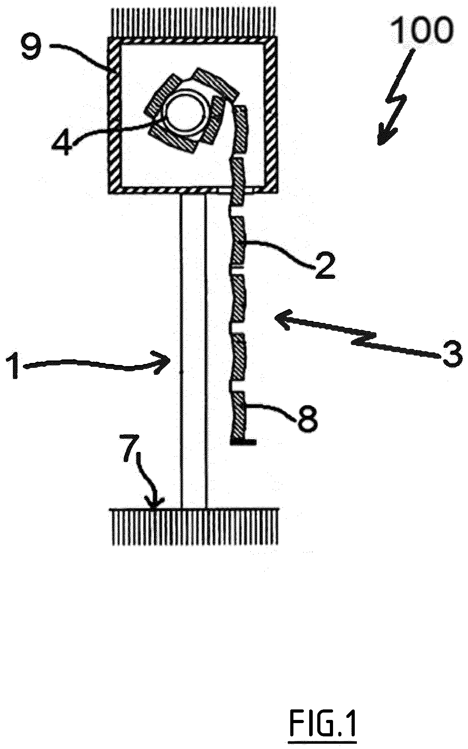

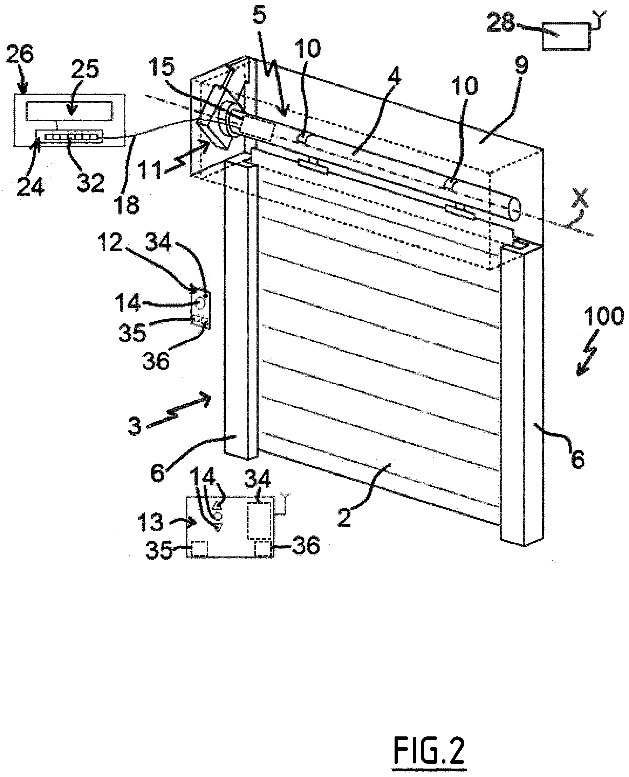

On décrit d'abord, en référence aux figures 1 et 2, une installation 100 de fermeture, d'occultation ou de protection solaire conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, un portail roulant, une grille, une porte ou encore un volet battant. En pratique, la présente invention s'applique à tous les types de dispositif d'occultation.

Ici, l'installation 100 comprend le dispositif d'occultation 3.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5. L'écran 2 est mobile entre une position enroulée, en particulier haute, et une position déroulée, en particulier basse.

Ici, l'installation 100 comprend le dispositif d'entraînement motorisé 5.

L'écran 2 mobile du dispositif d'occultation 3 est un écran de fermeture, d'occultation et/ou de protection solaire, s'enroulant sur le tube d'enroulement 4 dont le diamètre intérieur est sensiblement supérieur au diamètre externe d'un actionneur électromécanique 11, de sorte que l'actionneur électromécanique 11 peut être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à déplacer, en particulier dérouler ou enrouler, l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée position de fin de course haute FdcH, et une position fermée, correspondant à la position déroulée et pouvant également être appelée position de fin de course basse FdcB.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12.

L'unité de commande locale 12 peut être reliée par une liaison filaire ou non filaire avec une unité de commande centrale 13. L'unité de commande centrale 13 pilote l'unité de commande locale 12, ainsi que d'autres unités de commande locales similaires et réparties dans le bâtiment.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 100 comprend soit l'unité de commande locale 12, soit l'unité de commande centrale 13, soit l'unité de commande locale 12 et l'unité de commande centrale 13.

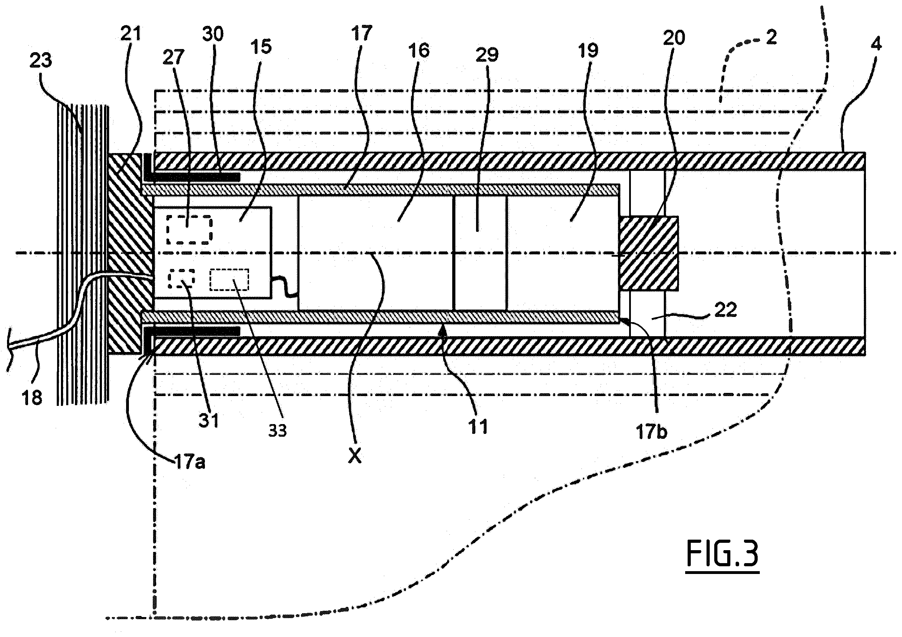

On décrit à présent, plus en détail et en référence à la figure 3, le dispositif d'entraînement motorisé 5, y compris l'actionneur électromécanique 11, appartenant à l'installation 100 des figures 1 et 2.

Avantageusement, l'actionneur électromécanique 11 comprend un moteur électrique 16. Le moteur électrique 16 comprend un rotor et un stator, non représentés et positionnés de manière coaxiale autour d'un axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, sont constitués par au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

L'unité électronique de contrôle 15 comprend au moins un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Préférentiellement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

L'unité électronique de contrôle 15, l'unité de commande locale 12 et/ou l'unité de commande centrale 13 peuvent être en communication avec une station météorologique, non représentée, déportée à l'extérieur du bâtiment, incluant, notamment, un ou plusieurs capteurs pouvant être configurés pour déterminer, par exemple, une température, une luminosité ou encore une vitesse de vent.

L'unité électronique de contrôle 15, l'unité de commande locale 12 et/ou l'unité de commande centrale 13 peuvent également être en communication avec un serveur 28, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 ou centrale 13. L'unité de commande locale 12 ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 12 ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant d'une fenêtre ou d'une porte. Un point de commande nomade peut être une télécommande, un téléphone intelligent ou une tablette.

Avantageusement, l'unité de commande locale 12 ou centrale 13 comprend également un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 15, en particulier du microcontrôleur 31. Le capteur et/ou l'horloge peuvent être intégrés à l'unité de commande locale 12 ou à l'unité de commande centrale 13.

Le dispositif d'entraînement motorisé 5 comprend un dispositif d'alimentation en énergie électrique 26.

Le dispositif d'alimentation en énergie électrique 26 comprend au moins une source d'énergie électrique 25, telle qu'un panneau photovoltaïque, et au moins un dispositif de stockage d'énergie électrique 24.

Le dispositif d'alimentation en énergie électrique 26 est configuré pour alimenter en énergie électrique l'actionneur électromécanique 11.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Ici, la source d'énergie électrique 25 est un panneau photovoltaïque relié électriquement au dispositif de stockage d'énergie électrique 24.

En variante, la source d'énergie électrique 25 est une éolienne reliée électriquement au dispositif de stockage d'énergie 24.

Le panneau photovoltaïque est positionné dans l'installation 100 pour permettre une alimentation en énergie électrique du dispositif d'entraînement motorisé 5 et, plus particulièrement, de l'actionneur électromécanique 11.

A titre d'exemple, le panneau photovoltaïque peut être localisé sur l'extérieur du coffre 9 du dispositif d'occultation 3 ou sur le toit du bâtiment.

L'actionneur électromécanique 11 est relié électriquement au dispositif d'alimentation en énergie électrique 26 et, plus particulièrement, au dispositif de stockage d'énergie électrique 24. De préférence, l'actionneur électromécanique 11 est relié électriquement au dispositif d'alimentation en énergie électrique 26 et, plus particulièrement, au dispositif de stockage d'énergie électrique 24 au moyen d'au moins un câble d'alimentation électrique 18, de sorte à permettre l'alimentation en énergie électrique de l'actionneur électromécanique 11 à partir du dispositif d'alimentation en énergie électrique 26.

L'unité électronique de contrôle 15 est reliée électriquement au dispositif d'alimentation en énergie électrique 26 et, plus particulièrement, au dispositif de stockage d'énergie électrique batterie 24.

Avantageusement, le dispositif de stockage d'énergie électrique 24 comprend au moins une batterie 32.

Avantageusement, la batterie 32 comprend au moins un élément de stockage d'énergie électrique, non représenté.

Ici, la batterie 32 comprend une pluralité d'éléments de stockage d'énergie électrique. Préférentiellement, les éléments de stockage d'énergie électrique sont reliés électriquement en série.

Le nombre d'éléments de stockage d'énergie électrique de la batterie n'est pas limitatif.

Avantageusement, le dispositif de stockage d'énergie électrique 24 est de type rechargeable et est configuré pour alimenter en énergie électrique l'actionneur électromécanique 11. En outre, le dispositif de stockage d'énergie électrique 24 est configuré pour être alimenté en énergie électrique par la source d'énergie électrique 25.

Ainsi, dans le cas où la source d'énergie électrique 25 est un panneau photovoltaïque, le rechargement du dispositif de stockage d'énergie électrique 24 est mis en oeuvre par énergie solaire, au moyen du panneau photovoltaïque.

De cette manière, le dispositif de stockage d'énergie électrique 24 peut être rechargé sans avoir à démonter une partie du coffre 9 du dispositif d'occultation 3.

Le panneau photovoltaïque comprend au moins une cellule photovoltaïque et, de façon préférentielle, une pluralité de cellules photovoltaïques.

Le dispositif d'entraînement motorisé 5, en particulier le panneau photovoltaïque 25, comprend des éléments de chargement configurés pour charger la batterie 32 du dispositif de stockage d'énergie électrique 24 à partir de l'énergie solaire récupérée par le panneau photovoltaïque 25.

Ainsi, les éléments de chargement configurés pour charger la batterie 32 du dispositif de stockage d'énergie électrique 24 à partir de l'énergie solaire permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique au moyen de la batterie 32 ou à partir d'un réseau d'alimentation électrique du secteur, en particulier par le réseau alternatif commercial, notamment en fonction d'un état de charge de la batterie 32.

Un carter 17 de l'actionneur électromécanique 11 est, préférentiellement, de forme cylindrique.

Dans un mode de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend également un réducteur 19, un frein 29 et un arbre de sortie 20.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs. Le nombre d'étages de réduction peut être supérieur ou égal à deux.

A titre d'exemple nullement limitatif, le frein 29 peut être un frein à ressort, un frein à came ou un frein électromagnétique.

L'actionneur électromécanique 11 peut également comprendre un dispositif de détection de fin de course et/ou d'obstacle, pouvant être mécanique ou électronique.

Avantageusement, le moteur électrique 16, le frein 29 et le réducteur 19 sont montés à l'intérieur du carter 17 de l'actionneur électromécanique 11.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend un support de couple 21. Le support de couple 21 est en saillie au niveau de la première extrémité 17a du carter 17 de l'actionneur électromécanique 11, en particulier l'extrémité 17a du carter 17 recevant la couronne 30. Le support de couple 21 de l'actionneur électromécanique 11 permet ainsi de fixer l'actionneur électromécanique 11 sur un bâti 23, en particulier à une joue du coffre 9.

En outre, le support de couple 21 de l'actionneur électromécanique 11 peut permettre d'obturer la première extrémité 17a du carter 17.

Par ailleurs, le support de couple 21 de l'actionneur électromécanique 11 peut permettre de supporter l'unité électronique de contrôle 15. L'unité électronique de contrôle 15 peut être alimentée en énergie électrique au moyen du câble d'alimentation électrique 18.

Ici, et tel qu'illustré à la figure 3, l'unité électronique de contrôle 15 est disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le bâti 23 ou dans le support de couple 21.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 22 relié au tube d'enroulement 4. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Le rotor du moteur électrique 16 comprend un corps de rotor muni d'éléments magnétiques entourés par le stator. Ici, les éléments magnétiques sont des aimants permanents.

Le stator du moteur électrique 16 est formé par un noyau de stator comprenant des éléments polaires répartis sur la périphérie du stator. Les éléments polaires sont également appelés des dents.

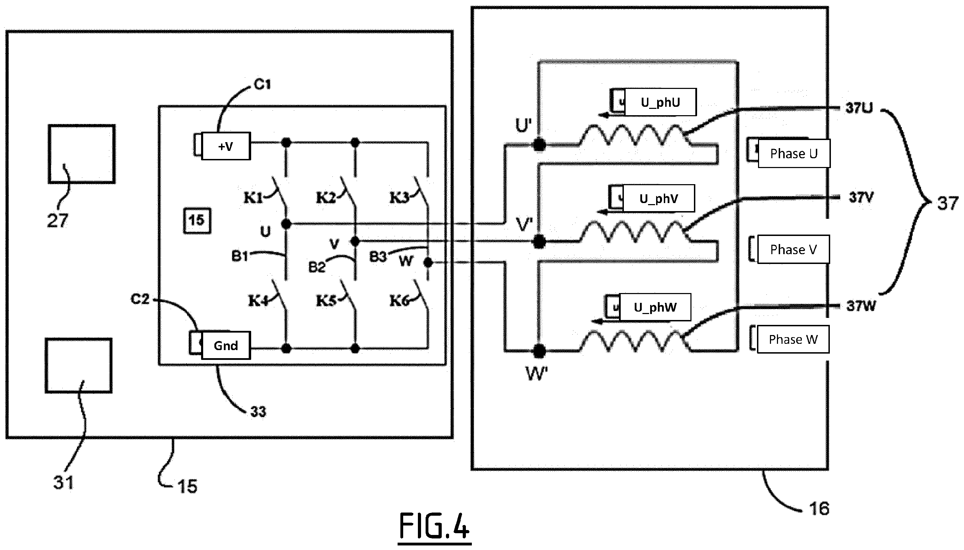

Le stator du moteur électrique 16 comprend une pluralité de bobinages 37, en l'occurrence trois bobinages 37U, 37V et 37W, reliés électriquement entre eux, tel qu'illustré à la figure 4. Ci-après, on utilise la référence générique 37 pour désigner indifféremment l'un ou l'autre des bobinages 37U, 37V et 37W ou tous ces bobinages.

Préférentiellement, les bobinages 37 sont positionnés autour des éléments polaires du stator. Plus précisément, chaque élément polaire est entouré par un enroulement qui lui est propre et qui forme une partie d'un bobinage. Il est néanmoins possible de n'avoir qu'un bobinage partiel comme par exemple un enroulement sur un élément polaire sur deux. Ces enroulement sont tels qu'ils ont le même nombre de spires par élément polaire. Les enroulements des éléments polaires diamétralement opposés sont reliés au niveau des extrémités du noyau de stator pour former un bobinage 37U, 37V, 37W correspondant à une phase. Les six enroulements étant reliés deux à deux, le stator comprend donc trois phases, formant en particulier une configuration en triangle.

Les bobinages 37 sont reliés entre eux de sorte que lorsqu'ils sont parcourus par un courant, ils produisent un champ électromagnétique tournant qui entraîne en rotation le rotor.

Les bobinages 37 sont isolés électriquement du noyau de stator par un élément isolant.

Ici, le moteur électrique 16 est de type sans balais à commutation électronique, ou appelé « BLDC » (acronyme du terme anglo-saxon BrushLess Direct Current), ou encore appelé synchrone à aimants permanents.

De manière générale, le procédé de commande en fonctionnement objet de l'invention s'applique aux moteurs électriques polyphasés, c'est-à-dire comprenant un nombre N de phases, N étant strictement supérieur à 1, quelle que soit la configuration de connexion des phases, comme par exemple, les moteurs dont les bobinages sont connectés en triangle ou en étoile ou encore les moteurs biphasés.

Le procédé de commande électronique utilise tout type d'électronique de commande permettant de générer un champ magnétique dans un stator bobiné. La commande peut par exemple comprendre des signaux d'alimentation de type trapézoïdal, de type sinusoïdal ou de type pseudo-sinusoïdal.

L'unité électronique de contrôle 15 de l'actionneur électromécanique 11 comprend un module d'alimentation électrique 33. Le module d'alimentation électrique 33 est ainsi connecté électriquement à une source de tension continue +V. La valeur de la tension continue +V est définie par rapport à une tension de référence Gnd.

Le module d'alimentation électrique 33 comprend une pluralité de bornes de sortie U, V, W configurées pour être connectées électriquement avec une pluralité de bornes d'entrée U', V', W' du moteur polyphasé 16. Dans l'exemple illustré sur la figure 4, le module d'alimentation électrique 33 comprend trois bornes de sortie destinées à être connectées électriquement avec trois bornes d'entrée du moteur électrique triphasé.

Bien entendu, cet exemple n'est nullement limitatif et le moteur électrique 16 peut être un moteur électrique à courant biphasé ou tout autre type de moteur électrique à courant polyphasé comprenant un nombre supérieur de phases.

Le module d'alimentation électrique 33 est configuré pour délivrer, de façon séquentielle, des signaux électriques entre deux bornes de sortie prises parmi la pluralité de bornes de sorties.

Le module d'alimentation électrique 33 alimente en énergie électrique, de manière séquentielle, les bobinages 37, de sorte à produire le champ électromagnétique tournant provoquant l'entraînement en rotation du rotor du moteur électrique 16.

Le module d'alimentation électrique 33 comprend une pluralité de branches B1, B2, B3 connectées électriquement en parallèle entre un premier point de connexion C1 et un deuxième point de connexion C2. Chaque branche B1, B2, B3 comprend un premier commutateur électronique K1, K2, K3 connecté électriquement au premier point de connexion C1 et connecté électriquement en série avec un deuxième commutateur électronique associé K4, K5, K6. Le deuxième commutateur électronique est connecté électriquement au deuxième point de connexion C2. La commutation simultanée d'un premier commutateur électronique et d'un deuxième commutateur électronique autre que son commutateur électronique associé permet d'alimenter au moins un bobinage 37U, 37V ou 37W du moteur électrique 16.

Ci-après, on utilise la référence générique K pour désigner indifféremment l'un ou l'autre commutateurs électroniques K1 à K6 ou tous ces commutateurs électroniques.

Les commutateurs électroniques K1 à K6 forment ensemble un onduleur et sont, de préférence, des transistors. Ici, les commutateurs K1 à K6 du module d'alimentation électrique 33 sont des transistors de type « MOSFET » (acronyme du terme anglo-saxon Metal Oxide Semiconductor Field Effect Transistor), et au nombre de six. Le type de commutateurs du module d'alimentation électrique et leur nombre sont nullement limitatifs. En particulier, les commutateurs K1 à K6 du module d'alimentation électrique 33 peuvent être des transistors de type « IGBT » (acronyme du terme anglo-saxon Insulated Gate Bipolar Transistor).

Sur l'exemple de la figure 4, le module d'alimentation électrique 33 présenté est un onduleur triphasé et le moteur est un moteur électrique triphasé dont les bobinages 37U, 37V, 37W sont connectés électriquement selon un montage triangle. Cet exemple de montage est nullement limitatif. En variante, les bobinages 37 du moteur électrique 16 peuvent être connectés électriquement suivant un montage en étoile.

Le premier point de connexion C1 du module d'alimentation électrique 33 est connecté électriquement à une première borne +V du dispositif d'alimentation en énergie électrique autonome 26, par l'intermédiaire du câble d'alimentation 18. Le deuxième point de connexion C2 est connecté électriquement à une deuxième borne Gnd du dispositif d'alimentation en énergie électrique autonome 26, par l'intermédiaire du câble d'alimentation 18.

Chaque branche B1, B2, B3 du module d'alimentation électrique 33 comprend un point milieu connecté électriquement à une borne de sortie U, V ou W.

Les premiers commutateurs électroniques K1, K2, K3 sont répartis dans un premier groupe de commutateurs et les deuxième commutateurs électroniques K4, K5, K6 sont répartis dans un deuxième groupe de commutateurs.

La commutation des commutateurs électroniques K est commandée par des signaux de commande générés par l'unité électronique de contrôle 15 formant une loi de commande prédéterminée. La loi de commande se décompose en une succession de séquences de commutation, chaque séquence correspondant à un ensemble de signaux pendant une durée déterminée. A chaque commutation d'un premier commutateur électronique K1, K2, K3 et d'un deuxième commutateur électronique autre que son commutateur associé K4, K5, K6, de son état bloquant vers son état passant, au moins un des bobinages 37U, 37V ou 37W du moteur électrique 16 est alimenté. La loi de commande est programmée de sorte que le module d'alimentation électrique 33 délivre, de façon séquentielle, une tension entre deux bornes de sortie prise parmi la pluralité de bornes de sortie du module d'alimentation électrique 33.

Lorsque les bornes d'entrée U', V' et W' du moteur électrique 16 sont connectées électriquement aux bornes de sortie U, V et W du module d'alimentation électrique 33, les signaux électriques délivrés par l'onduleur, sont programmés pour alimenter séquentiellement les bobinages du stator du moteur électrique polyphasé, afin de générer un champ électrique tournant apte à entraîner le rotor en rotation en mode de fonctionnement habituel ou nominal du moteur.

Le microcontrôleur 31 de l'unité électronique de contrôle 15 peut être programmé ou agencé de sorte à produire une commande des commutateurs électroniques K1 à K6 à une fréquence supérieure ou égale à 10kHz, notamment une commande selon une technique de modulation de largeur d'impulsions, dite PWM pour « Puise Width Modulation » à une fréquence supérieure ou égale à 10kHz. Le choix de la fréquence est effectué en fonction de la valeur du courant que l'on doit consommer et selon la technologie de moteur utilisée.

Le nombre de commutateurs électroniques K peut être différent de 6. Par exemple, le module d'alimentation électrique 33 peut comprendre moins de six commutateurs électroniques ou plus de six commutateurs électroniques, notamment quatre commutateurs électroniques ou huit commutateurs électroniques. En particulier, quatre ou huit commutateurs électroniques peuvent être utilisés pour commander un moteur biphasé.

Le module d'alimentation électrique 33 comprend des éléments matériels et/ou logiciels régissant son fonctionnement, notamment les éléments matériels et/ou logiciels comprennent tous les moyens permettant de mettre en oeuvre le procédé de commande électronique objet de l'invention, en particulier les modes d'exécution du procédé de commande électronique décrits plus bas. Ces éléments matériels et/ou logiciels peuvent comprendre des modules logiciels et peuvent être communs avec les autres éléments matériels et/ou logiciels de l'unité de contrôle 15 mentionnés ci-dessus.

Le procédé selon l'invention propose d'employer un moteur électrique polyphasé 16 d'une installation 100 comme moyen de délestage d'une batterie en maintenant le rotor du moteur à l'arrêt. Le procédé permet donc de réguler la surproduction en énergie électrique d'un dispositif d'alimentation en énergie électrique autonome 26 sans ajout d'élément physique supplémentaire ou modification des éléments physiques d'une installation.

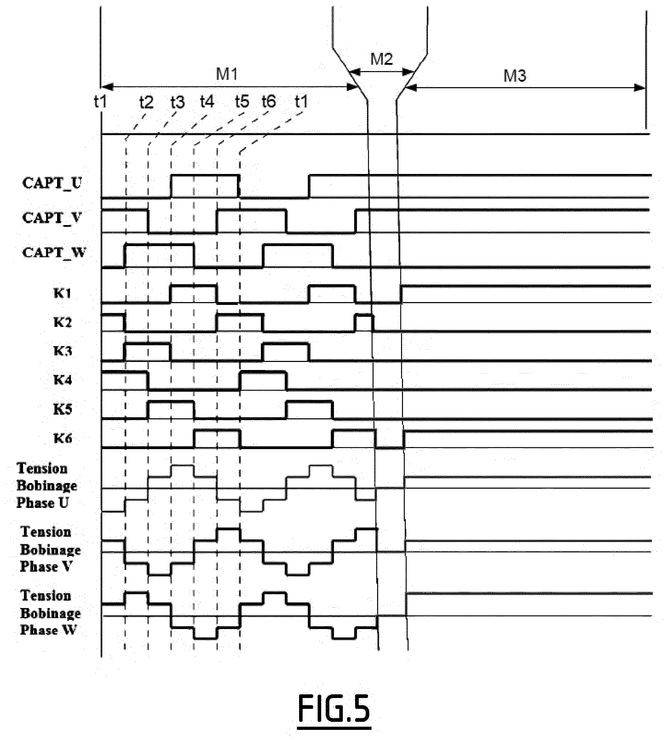

En mode de fonctionnement M1 habituel ou nominal du moteur, le moteur est autopiloté ou commandé en boucle fermée, les signaux injectés dans le moteur étant déterminés par la position du rotor dans le stator. On utilise un ou plusieurs capteurs de position. Les capteurs sont physiques ou virtuels. En effet, des capteurs virtuels peuvent être des moyens de calcul permettant de reconstituer une information de position du rotor du moteur par rapport au stator à partir d'autres caractéristiques du moteur (courant par exemple). On applique le signal électrique d'alimentation au moteur en fonction de la position du stator. Des signaux de capteurs CAPT_U, CAPT_V et CAPT_W sont représentés à la figure 5 et déterminent par exemple les états des commutateurs électroniques K1 à K6 définissant l'alimentation du moteur. A cette fin, l'actionneur électromécanique 11 comprend avantageusement des capteurs non représentés permettant de déterminer la position du rotor relativement au stator du moteur électrique 16.

Un tel mode de fonctionnement M1 est illustré sur la gauche de la figure 5. Dans un tel mode de fonctionnement, la totalité des bobinages 37 du moteur électrique 16 est alimentée en énergie électrique fournie par la batterie 32, en particulier sous forme de signaux injectés dans le moteur électrique 16, les signaux injectés produisant un champ magnétique tournant dans le stator. Dans la représentation du mode M1 à la figure 5, les instants ti, pour i entier naturel entre 1 et 6, correspondent aux instant d'ouverture/fermeture des commutateurs électroniques K1 à K6, afin de créer un signal ondulé dans les phases du moteur électrique 16, nécessaire à la formation d'un champ magnétique tournant dans le moteur électrique. Ce champ magnétique est suivi par le rotor qui produit lui aussi un champ magnétique dans le cas d'un rotor équipé d'aimant permanents, ou qui ferme les lignes de champ magnétique dans le cas d'un moteur sans aimant, tel qu'un moteur dit « synchro reluctant », provoquant ainsi le mouvement du rotor et de l'arbre de sortie 20 lié au rotor.

Dans un deuxième mode de fonctionnement M2, on coupe l'alimentation en énergie électrique du moteur électrique 16. Dans ce deuxième mode de fonctionnement M2, les commutateurs électroniques K sont ouverts et aucun courant ne peut alors circuler dans les bobinages 37 du moteur électrique 16. Aucun champ magnétique n'étant produit, l'arbre de sortie 20, lié au rotor du moteur électrique 16, reste immobile. Un tel mode est également illustré sur la figure 5, au centre de celle-ci. Dans ce deuxième mode de fonctionnement, l'unité de contrôle 15, met en oeuvre selon un ordre prédéfini, ou en réponse à un évènement, des phases d'inactivité, des phases d'écoute et des phases de communication.

Dans un troisième mode de fonctionnement M3, on alimente de façon particulière les bobinages 37 du moteur électrique 16, par l'intermédiaire des commutateurs électroniques K, de manière à garder l'arbre de sortie 20 lié au rotor immobile.

Avantageusement, dans ce troisième mode de fonctionnement M3, les commutateurs électroniques K sont commandés en fonction du type de moteur électrique 16 et de la configuration des phases du moteur électrique 16.

Avantageusement, dans ce troisième mode de fonctionnement M3, les commutateurs électroniques K sont également commandés en fonction de la position du rotor et de l'arbre 20 lié au rotor du moteur électrique 16, en particulier de la position du rotor à l'instant précédent la mise en oeuvre du troisième mode de fonctionnement M3.

Avantageusement, dans ce troisième mode de fonctionnement M3, les commutateurs électroniques K sont également commandés en fonction d'une valeur déterminée du courant consommé à partir de la batterie 32 vers le moteur électrique 16.

Avantageusement, dans ce troisième mode de fonctionnement M3, le rapport cyclique et la fréquence du signal électrique de commande des commutateurs électroniques K sont déterminés en fonction d'une table de correspondance de manière à ajuster la valeur du courant consommé à partir de la batterie 32 vers le moteur électrique 16.

Un premier mode de réalisation du mode de fonctionnement M3 est illustré sur la droite de la figure 5. Dans cet exemple de mise en oeuvre de ce mode de fonctionnement M3, la position du rotor et de l'arbre 20 lié au rotor du moteur électrique 16 est déterminée par la lecture des signaux des capteurs CAPT_U, CAPT_V et CA PT _W. Les commutateurs électroniques K1 à K6 sont ensuite commandés en fonction d'une table de vérité prédéterminée pour diriger le courant fourni par la batterie 32 au travers des bobinages 37U, 37V et 37W formant les phases U, V et W. Ici, en fonction de la lecture des signaux CAPT_U, CAPT_V et CAPT_W, les commutateurs électroniques K1 et K6 sont fermés tandis que les commutateurs électroniques K2 à K5 sont ouverts. Ainsi, le bobinage 37U est connecté en série avec le bobinage 37V, les bobinages 37U et 37V étant connectés en parallèle avec le bobinage 37W. Dans l'exemple, les trois phases sont alimentées de manière statique en fonction de la position du rotor et le rapport cyclique de commande des commutateurs électroniques K est configuré à 100%, de manière à consommer le maximum de courant à partir de la batterie 32. Ainsi, l'alimentation statique, en fonction de la position du rotor, des trois phases permet au courant issu de la batterie 32 d'être consommé par les bobinages 37 du moteur électrique 16 sans pour autant créer de champ magnétique tournant dans le moteur électrique 16. Aucun champ magnétique tournant n'étant produit, l'arbre de sortie 20, lié au rotor du moteur électrique 16, reste immobile

Selon un deuxième mode de réalisation non représenté du mode de fonctionnement M3, et toujours selon le câblage en triangle des phases du moteur électrique 16, il est possible d'alimenter deux bobinages en parallèle, le troisième bobinage étant dans ce cas court-circuité. A rapport cyclique équivalent, cette configuration consommera moins de courant à partir de la batterie 32 que la configuration décrite ci-dessus.

Selon un troisième mode de réalisation non représenté du mode de fonctionnement M3, et dans le cas d'un moteur triphasé dont les phases sont connectées en étoile, et à rapport cyclique équivalent, c'est la configuration où deux bobinages sont connectés en parallèle, le troisième bobinage étant court-circuité, qui consommera le plus de courant à partir de la batterie 32.

De manière générale, le mode de fonctionnement M3 peut être mis en oeuvre pour une variété de moteurs électriques comprenant au moins deux bobinages en alimentant les bobinages selon une pluralité de combinaisons possibles afin de d'associer les bobinages en série et/ou en parallèle.

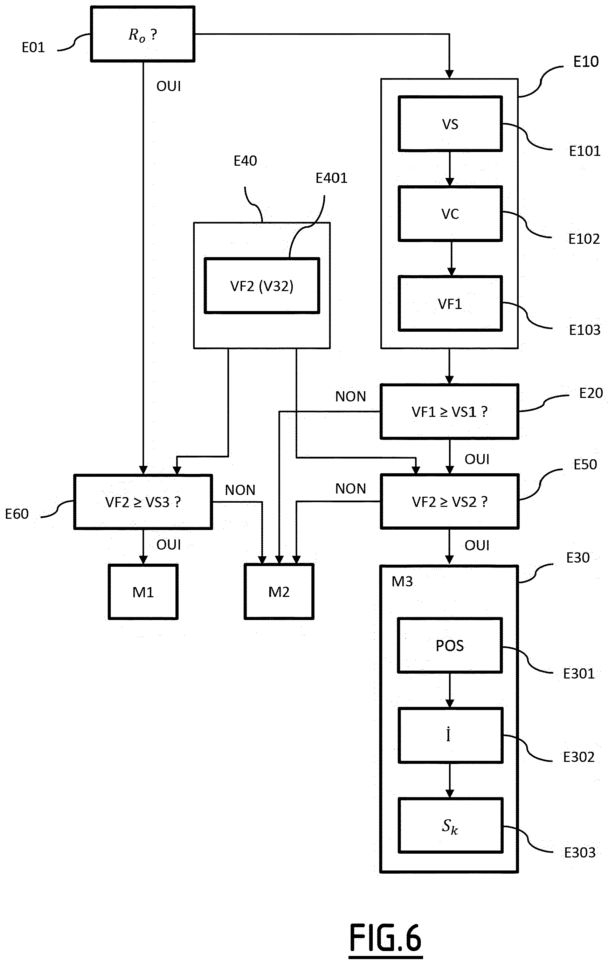

On décrit à présent, en référence à la figure 6, un mode d'exécution d'un procédé de commande en fonctionnement d'un dispositif d'entrainement motorisé 5 conforme à l'invention représentée aux figures 1 à 4.

Avantageusement, le procédé comprend une étape E01 de vérification de la réception R_{O} d'un ordre de commande par l'unité de contrôle électronique 15.

Le procédé comprend une première étape E10 de détermination d'une valeur VF1 d'une première grandeur physique représentative du fonctionnement du dispositif d'entrainement motorisé 5, qui est mise en oeuvre si aucun ordre de commande n'a été détecté à l'étape E01.

Avantageusement, la première étape E10 de détermination comprend au moins :
- une première sous-étape E101 de détermination d'une valeur VS d'un apport d'énergie électrique de de la source d'alimentation en énergie électrique 26 vers la batterie 32 pendant une période de temps prédéterminée P,
- une deuxième sous-étape E102 de détermination d'une valeur VC de consommation d'énergie électrique de l'actionneur électromécanique 11 pendant la période de temps prédéterminée P, et
- une troisième sous-étape E103 de calcul de la valeur VF1 pendant la période de temps P prédéterminée, cette valeur VF1 étant déterminée en faisant la différence entre la valeur VS d'apport d'énergie électrique et la valeur VC de consommation d'énergie électrique de l'actionneur électromécanique 11, selon la relation VF1=VS-VC.

En variante, l'ordre des étapes E101 et E102 peut être inversé ou ces étapes ont lieu simultanément.

Avantageusement, la valeur VS d'apport d'énergie électrique de la source d'alimentation en énergie électrique 26 vers la batterie 32 pendant la période de temps P prédéterminée est le résultat de l'intégration sur la période de temps P prédéterminée d'une première séries de mesures S1 effectuées, avec un intervalle de temps ΔT régulier, du courant fourni par la source d'alimentation en énergie électrique 26 et d'une deuxième séries de mesures S2 effectuées, selon l'intervalle de temps ΔT, de la tension de la batterie 32. Dans ce cas, VS est une image de la puissance rechargée dans la batterie 32 sur la période de temps P prédéterminée.

A titre d'exemple, l'intervalle de temps ΔT peut être fixé à 10 secondes et la période de temps peut être fixée à 20 jours.

Avantageusement, la valeur VC de consommation d'énergie électrique de l'actionneur électromécanique 11 pendant la période de temps P prédéterminée est le résultat de l'intégration sur la période de temps P prédéterminée d'une troisième série de mesures S3 effectuées, selon l'intervalle de temps ΔT, du courant consommé par l'actionneur électromécanique 11 et d'une quatrième série de mesures S4 effectuées, selon l'intervalle de temps ΔT, de la tension de la batterie 32. Dans ce cas, VC est une image de la puissance fournie par la batterie 32 sur une période de temps P prédéterminée.

En variante, valeur VC de consommation d'énergie électrique de l'actionneur électromécanique 11 peut être déterminée en mesurant pendant la période de temps P prédéterminée le courant consommé par l'actionneur électromécanique 11 et la tension de la batterie 32 uniquement lors de la mise en oeuvre par l'actionneur électromécanique 11 du mode de fonctionnement M1 nominal, autrement dit, lors d'un mouvement du rotor et de l'arbre de sortie 20 lié au rotor de l'actionneur électromécanique 11. Cette approximation est possible en tenant compte du fait que la valeur de consommation d'énergie électrique de l'actionneur électromécanique 11 consommée lors de la mise en oeuvre par l'actionneur électromécanique 11 du mode de fonctionnement nominal est très largement supérieure à la valeur de consommation d'énergie électrique de l'actionneur électromécanique 11 consommée lors de la mise en oeuvre par l'actionneur électromécanique 11 du mode de fonctionnement M2, autrement dit, lors des phases d'inactivité, des phases d'écoute et des phases de communication de l'unité de contrôle 15 de l'actionneur électromécanique 11. Dans ce cas, la valeur VC de consommation d'énergie électrique mesurée peut être réajustée avec une valeur moyenne de consommation d'énergie électrique correspondant à l'énergie électrique consommée par l'actionneur électromécanique 11 pendant les phases d'inactivité, d'écoute et de communication de l'unité de contrôle 15.

Ainsi, l'étape E10 de détermination d'une valeur VF1 d'une première grandeur physique représentative du fonctionnement du dispositif d'entrainement motorisé 5 permet de déterminer la balance énergétique du dispositif d'entrainement motorisé 5.

Le procédé comprend également une première étape E20 de comparaison de la valeur VF1 de la première grandeur physique par rapport à une première valeur SV1 seuil prédéterminée. La première valeur SV1 seuil prédéterminée peut être choisie, par exemple, comme une valeur de la première grandeur physique au-delà de laquelle la balance énergétique du dispositif d'entrainement motorisé 5 est excédentaire. La balance énergétique du dispositif d'entrainement motorisé 5 est déterminée en fonction du comportement du panneau photovoltaïque, de la batterie, et de l'actionneur électromécanique.

Le procédé comprend également une étape E30 de délestage, qui consiste à basculer l'alimentation du moteur 16 dans le mode M3, comme expliqué ci-après.

Avantageusement, le procédé comprend, en outre :
- une deuxième étape E40 de détermination d'une valeur VF2 d'une deuxième grandeur physique représentative du fonctionnement du dispositif d'entrainement motorisé 5, et
- une deuxième étape E50 de comparaison de la valeur VF2 de la deuxième grandeur physique par rapport à une deuxième valeur SV2 seuil prédéterminée.

La deuxième valeur SV2 seuil prédéterminée peut être choisie, par exemple, comme égale à la valeur maximale d'état de charge de la batterie 32 prévue lorsque la balance énergétique est excédentaire pour la période de temps prédéterminée P. En pratique, cette deuxième valeur seuil SV2 permet d'abaisser la valeur maximale d'état de charge de la batterie 32 lorsque la balance énergétique est excédentaire, c'est-à-dire lorsque la valeur seuil SV1 est dépassée. Par exemple, en hiver, la valeur seuil SV1 n'est pas dépassée et la valeur maximale d'état de charge de la batterie est de 100%. En été, la balance énergétique du dispositif d'entrainement motorisé 5 devient excédentaire, la valeur seuil SV1 est dépassée et, donc, lorsque la batterie 32 est chargée au-delà de la valeur de seuil SV2, on déleste la batterie jusqu'à atteindre ce seuil SV2.

Ainsi, la valeur seuil VS1 correspond à une valeur seuil d'écart entre la quantité d'énergie reçue et la quantité d'énergie transmise par la batterie 32 pendant une période de temps P. La valeur seuil VS2 correspond, quant à elle, à une valeur maximale d'état de charge de la batterie, par exemple égale à 60%, pendant les périodes où la balance énergétique est excédentaire. Le reste du temps, autrement dit quand la valeur seuil VS1 n'est pas dépassée, la batterie 32 est chargée jusqu'à une valeur maximale d'état de charge prédéfinie, par exemple égale à 100% de l'état de charge nominal de la batterie.

En pratique, le pourcentage correspondant au rapport de la valeur seuil SV2sur la valeur maximale d'état de charge de la batterie 32 lorsque la balance énergétique est excédentaire peut être différent de 60%. Il peut être choisi en fonction de la zone géographique d'implantation de l'installation 100.

Avantageusement, la deuxième étape E40 de détermination comprend une première sous-étape E401 de détermination d'une valeur V32 d'état de charge de la batterie 32.

A titre d'exemple nullement limitatif, la détermination de la valeur V32 d'état de charge de la batterie 32 peut être réalisée par la mesure de la tension de la batterie 32, en particulier pendant ses phases de décharge ou de relaxation, ou par Coulombmétrie réalisée par une unité de mesure par Coulombmétrie non représentée comprise dans le dispositif de stockage d'énergie 24, en particulier dans la batterie 32.

Ici, la valeur VF2 est choisie égale à la valeur V32. Ainsi, la première sous-étape E401 est une sous étape de détermination de la valeur VF2.

En variante, dans le cas où les valeurs VF2 et V32 sont différentes, une sous étape complémentaire est prévue dans l'étape E40 pour déterminer, de préférence par le calcul, la valeur VF2 à partir de la valeur V32.

L'étape E30 de délestage est mise en oeuvre si :
- aucun ordre de commande n'est reçu par l'unité électronique de commande 15,
- l'étape E20 détermine que la valeur VF1 de la première grandeur physique est supérieure ou égale à la valeur VS1 seuil prédéterminée, indiquant par exemple que la balance énergétique du système est excédentaire, et
- l'étape E50 détermine que la valeur VF2 de la deuxième grandeur physique de l'état de charge de la batterie 32 est supérieure ou égale à la valeur VS2 seuil prédéterminée, indiquant par exemple que la valeur V32 d'état de charge de la batterie 32 est supérieure à la valeur maximale d'état de charge prévue pour la période de temps prédéterminée P qui est, par exemple, en été, de 60% d'état de charge maximum sur la période en excédent d'énergie reçue par la source d'énergie électrique 25 par rapport à l'énergie consommée par l'actionneur électromécanique 11.

Selon un premier exemple d'implémentation de l'étape de délestage E30, à minuit, l'unité électronique de commande 15 calcule la balance énergétique du dispositif d'entrainement motorisé 5 sur les 24 dernières heures, c'est-à-dire l'énergie générée par le panneau solaire moins l'énergie consommée par le dispositif d'entrainement motorisé. L'unité électronique de commande 15 relève également le niveau de charge de la batterie 32. Si la condition vérifiée à l'étape E50 est satisfaite, l'unité électronique de commande 15 lance l'étape E30 de délestage de la batterie 32 dans laquelle on alimente les bobinages 37 du moteur électrique 16 à partir de l'énergie électrique fournie par la batterie 32, tout en maintenant l'arbre de sortie 20 immobile. L'exécution de l'étape de délestage E30 la nuit permet de minimiser l'occurrence de demandes de mouvements par l'utilisateur pendant le délestage.

Selon un deuxième exemple d'implémentation de l'étape de délestage E30, si, suite au calcul de la balance énergétique du dispositif d'entrainement motorisé 5, on souhaite rester à un niveau donné de charge de la batterie 32, il est possible d'alimenter en permanence les bobinages 37 du moteur électrique 16, tout en maintenant l'arbre de sortie 20 immobile. De cette manière, le courant électrique généré par le panneau solaire est directement dévié dans les bobinages 37 du moteur électrique 16 et n'est pas stocké dans la batterie 32.

Avantageusement, le mode de fonctionnement M2 est mis en oeuvre par le moteur électrique 16 lorsque l'une ou l'autre des conditions vérifiées aux étapes E20 et E50 n'est pas respectée.

Avantageusement, le procédé comprend, en outre, une troisième étape E60 de comparaison de la valeur VF2 de la deuxième grandeur physique par rapport à une troisième valeur SV3 seuil prédéterminée.

La troisième valeur SV3 seuil prédéterminée peut être choisie, par exemple, comme la valeur minimale d'état de charge de la batterie 32 pour mettre en oeuvre le mode de fonctionnement M1, autrement dit la mise en oeuvre d'un mouvement du rotor et de l'arbre 20 lié au rotor du moteur électrique.

Le mode de fonctionnement M1 nominal ou le mode de fonctionnement M2 du moteur électrique 16 est mis en oeuvre en fonction du résultat de la troisième étape E60 de comparaison et si un ordre de commande est reçu par l'unité électronique de contrôle 15 provenant de l'unité de commande 12 ou 13. Plus précisément, le mode de fonctionnement M1 nominal est mis en oeuvre si l'étape E60 détermine que la valeur VF2 de la deuxième grandeur physique est supérieure à la troisième valeur SV3 seuil prédéterminée et le mode de fonctionnement M2 est mis en oeuvre si l'étape E60 détermine que la valeur VF2 de la deuxième grandeur physique est strictement inférieure à la troisième valeur SV3 seuil prédéterminée.

A titre d'exemple nullement limitatif, le mode de fonctionnement M1 nominal du moteur électrique 16 peut être mis en oeuvre lorsque l'unité électronique de contrôle 15 reçoit un ordre de commande provenant de l'unité de commande 12 ou 13 et que la valeur V32 d'état de charge de la batterie 32 permet d'alimenter le mode de fonctionnement M1 du moteur électrique 16 afin de réaliser une opération de mouvement du dispositif d'entrainement motorisé 5.

Dans le cas où le procédé ne comprend pas les étapes E40 et E50, l'étape E30 est mise en oeuvre en tenant compte uniquement du résultat de la première étape E20 de comparaison et si aucun ordre de commande n'est reçu par l'unité électronique de contrôle 15, lors de l'étape de réception d'ordre de commande E01, provenant de l'unité de commande 12 ou 13.

Avantageusement, l'étape E30 de délestage met en oeuvre le mode de fonctionnement M3 et comprend au moins :
- une première sous-étape E301 de détermination de la position POS du rotor et de l'arbre 20 lié au rotor du moteur électrique 16.
- une deuxième sous-étape E302 de détermination d'une valeur du courant I circulant de la batterie 32 vers les bobinages 37 du moteur électrique 16,
- une troisième sous-étape E303 de détermination du signal S_{K} de commande des commutateurs électroniques K, en fonction d'au moins les résultats des sous-étapes E301 et E302 précédentes, du type de moteur électrique, ou de la configuration de connexion électrique des bobinages 37 du moteur électrique 16.

Ainsi, la quantité d'énergie électrique fournie par la batterie 32 et consommée par le moteur électrique 16 de l'actionneur électromécanique 11 peut être maîtrisée, par exemple en mesurant le courant traversant la phase alimentée par l'intermédiaire d'un shunt présent sur cette phase alimentée, puis en ajustant la fréquence et le rapport cyclique du signal S_{K} de commande des commutateurs électroniques K.

Avantageusement, la fréquence du signal S_{K} de commande des commutateurs électroniques K, déterminée pendant la sous-étape E303, est choisie dans une plage de valeurs supérieure ou égale à 10kHz et inférieure à 50kHz. En effet, plus cette fréquence est élevée, moins le moteur consomme de courant. Il est donc préférable de se rapprocher des 10kHz, tout en évitant de créer une gêne sonore. On peut également moduler le rapport cyclique du signal, vers 100% pour une consommation maximale, vers 0% pour une consommation minimale

Les modes de réalisation et les variantes mentionnés ci-dessus peuvent être combinés entre eux pour générer de nouveaux modes de réalisation.

En variante, le moteur électrique 16 peut être un moteur biphasé, dans un tel cas, le mode de fonctionnement M3 est mise en oeuvre en alimentant une des deux phases du moteur électrique, ou les deux phases en parallèle.

## Revendications

1. Procédé de commande en fonctionnement d'un dispositif d'entrainement motorisé (5), le dispositif d'entrainement motorisé (5) comprenant au moins :
- un dispositif d'alimentation en énergie électrique (26),
- un actionneur électromécanique (11), et
- une unité de commande (12, 13),
le dispositif d'alimentation en énergie électrique (26) comprenant au moins :
- une batterie (32), et
- une source d'énergie électrique (25), la source d'énergie électrique (25) étant configurée pour charger la batterie (32),
l'actionneur électromécanique (11) comprenant au moins :
- un moteur électrique (16), le moteur électrique (16) comprenant une pluralité de bobinages (37),
- un arbre de sortie (20), et
- une unité électronique de contrôle (15),
le procédé comprenant au moins :
- une première étape (E10) de détermination d'une valeur (VF1) d'une première grandeur physique représentative du fonctionnement du dispositif d'entrainement motorisé (5), et
- une première étape (E20) de comparaison de la valeur de la première grandeur physique par rapport à une première valeur (SV1) seuil prédéterminée,
**caractérisé en ce que** le procédé comprend, en fonction du résultat de la première étape (E20) de comparaison, une étape (E30) de délestage dans laquelle on alimente les bobinages (37) du moteur électrique (16) à partir de l'énergie électrique fournie par la batterie (32), tout en maintenant l'arbre de sortie (20) immobile, si la valeur de la première grandeur physique est supérieure ou égale à la première valeur seuil prédéterminée et si aucun ordre de commande n'est reçu par l'unité électronique de contrôle (15) provenant de l'unité de commande (12, 13).

2. Procédé de commande en fonctionnement d'un dispositif d'entrainement motorisé (5) selon la revendication 1, **caractérisé en ce que** la première étape (E10) de détermination comprend :
- une première sous-étape (E101) de détermination d'une valeur (VS) d'un apport d'énergie électrique de de la source d'alimentation en énergie électrique (26) vers la batterie (32) pendant une période de temps (T7) prédéterminée,
- une deuxième sous-étape (E102) de détermination d'une valeur (VC) de consommation d'énergie électrique de l'actionneur électromécanique (11) pendant la période de temps prédéterminée
- une troisième sous-étape (E103) de détermination de la valeur (VF1) de la première grandeur physique représentative du fonctionnement du dispositif d'entrainement motorisé (5) par le calcul de la différence entre la valeur (VC) de consommation d'énergie électrique déterminée à la deuxième sous-étape (E102) et de la valeur (VS) de l'apport d'énergie électrique déterminée à la première sous-étape (E101).

3. Procédé de commande en fonctionnement d'un dispositif d'entrainement motorisé (5) selon la revendication 1 ou selon la revendication 2, **caractérisé en ce que** le procédé comprend, en outre :
- une deuxième étape (E50) de détermination d'une valeur (VF2) d'une deuxième grandeur physique représentative du fonctionnement du dispositif d'entrainement motorisé (5), et
- une deuxième étape (E60) de comparaison de la valeur de la deuxième grandeur physique par rapport à une deuxième valeur (SV2) seuil prédéterminée,
et **en ce que** l'étape (E30) de délestage est mise en oeuvre également en fonction du résultat de la deuxième étape (E60) de comparaison.

4. Procédé de commande en fonctionnement d'un dispositif d'entrainement motorisé (5) selon la revendication 3, **caractérisé en ce que** la deuxième étape (E40) de détermination comprend une première sous-étape (E401) de détermination d'une valeur d'état de charge de la batterie (32).

5. Procédé de commande en fonctionnement d'un dispositif d'entrainement motorisé (5) selon la revendication 2 et selon la revendication 4, **caractérisé en ce que** la première sous-étape (E101) de détermination d'une valeur (VS) de l'apport d'énergie électrique est identique à la première sous-étape (E401) de détermination d'une valeur d'état de charge de la batterie (32).

6. Procédé de commande en fonctionnement d'un dispositif d'entrainement motorisé (5) selon l'une quelconque des revendications précédentes, dans lequel l'unité électronique de contrôle (15) comprend une pluralité de commutateurs électroniques (K1-K6), configurés pour alimenter en énergie électrique le moteur électrique (16), **caractérisé en ce que** l'étape (E30) de délestage comprend en outre une sous-étape (E301) de commande du moteur électrique (16) selon un rapport cyclique de commutation prédéterminé des commutateurs électroniques (K1, K2, K3, K4, K5, K6).

7. Procédé de commande en fonctionnement d'un dispositif d'entrainement motorisé (5) selon l'une quelconque des revendications précédentes, dans lequel le moteur électrique (16) est un moteur triphasé **caractérisé en ce que** l'étape (E30) de délestage est mise en oeuvre en alimentant les trois phases du moteur électrique (16), alors qu'une une phase est en parallèle avec les deux autres phases qui sont connectées en série.

8. Procédé de commande en fonctionnement d'un dispositif d'entrainement motorisé (5) selon l'une des revendications 1 à 6, dans lequel le moteur électrique (16) est un moteur triphasé, **caractérisé en ce que** l'étape (E30) de délestage est mise en oeuvre en alimentant deux phases en parallèle du moteur électrique (16), alors que la troisième phase est court-circuitée.

9. Procédé de commande en fonctionnement d'un dispositif d'entrainement motorisé (5) selon la revendication 6, **caractérisé en ce que** l'étape (E30) de délestage est mise en oeuvre selon une fréquence prédéterminée de commutation des commutateurs électroniques (K1, K2, K3, K4, K5, K6), la fréquence prédéterminée étant dans une plage de valeurs entre 10kHz et 50kHz

10. Dispositif d'entrainement motorisé (5) comprenant au moins :
- un dispositif d'alimentation en énergie électrique (26),
- un actionneur électromécanique (11), et
- une unité de commande (12, 13),
le dispositif d'alimentation en énergie électrique (26) comprenant au moins :
- une batterie (32), et
- une source d'énergie électrique (25), la source d'énergie électrique (25) étant configurée pour charger la batterie (32),
l'actionneur électromécanique (11) comprenant au moins :
- un moteur électrique (16), le moteur électrique (16) comprenant une pluralité de bobinages (37),
- un arbre de sortie (20), et
- une unité électronique de contrôle (15),
**caractérisé en ce que** l'unité électronique de contrôle (15) est configurée pour mettre en oeuvre le procédé selon l'une quelconque des revendications 1 à 9.

11. Dispositif d'entrainement motorisé selon la revendication précédente, **caractérisé en ce que** le moteur électrique (16) est de type sans balais à commutation électronique.

12. Dispositif d'entrainement motorisé selon l'une des revendications 10 et 11, **caractérisé en ce que** la source d'énergie électrique (25) est un panneau photovoltaïque.

## Patentansprüche

1. Betriebssteuerverfahren einer motorisierten Antriebsvorrichtung (5), die motorisierte Antriebsvorrichtung (5) mindestens umfassend:
- eine Versorgungsvorrichtung elektrischer Energie (26),
- einen elektromechanischen Aktuator (11), und
- eine Steuereinheit (12, 13),
die Versorgungsvorrichtung elektrischer Energie (26) mindestens umfassend:
- eine Batterie (32), und
- eine elektrische Energiequelle (25), wobei die elektrische Energiequelle (25) konfiguriert ist, um die Batterie (32) aufzuladen,
der elektromechanische Aktuator (11) mindestens umfassend:
- einen Elektromotor (16), der Elektromotor (16) umfassend eine Vielzahl von Wicklungen (37),
- eine Ausgangswelle (20) und
- eine elektronische Steuereinheit (15),
das Verfahren mindestens umfassend:
- einen ersten Bestimmungsschritt (E10) eines Werts (VF1) einer ersten physikalischen Größe, die repräsentativ für den Betrieb der motorisierten Antriebsvorrichtung (5) ist, und
- einen ersten Vergleichsschritt (E20) des Werts der ersten physikalischen Größe mit einem ersten vorbestimmten Schwellenwert (SV1),
**dadurch gekennzeichnet, dass** das Verfahren abhängig von dem Resultat des ersten Vergleichsschritts (E20) einen Entlastungsschritt (E30) umfasst, bei dem die Wicklungen (37) des Elektromotors (16) anhand der elektrischen Energie, die von der Batterie (32) bereitgestellt wird, versorgt werden, während die Abtriebswelle (20) unbeweglich gehalten wird, wenn der Wert der ersten physikalischen Größe größer als oder gleich wie der erste vorbestimmte Schwellenwert ist und wenn von der Steuereinheit (12, 13) kein Steuerbefehl an die elektronische Steuereinheit (15) empfangen wird.

2. Betriebssteuerverfahren einer motorisierten Antriebsvorrichtung (5) nach Anspruch 1, **dadurch gekennzeichnet, dass** der erste Schritt (E10) eines Bestimmens Folgendes umfasst:
- einen ersten Bestimmungsteilschritt (E101) eines Werts (VS) einer Zufuhr elektrischer Energie von der Versorgungsquelle elektrischer Energie (26) zu der Batterie (32) während einer vorbestimmten Zeitdauer (T7),
- einen zweiten Bestimmungsteilschritt (E102) eines Werts (VC) eines Verbrauchs elektrischer Energie des elektromechanischen Aktuators (11) während der vorbestimmten Zeitdauer
- einen dritten Bestimmungsteilschritt (E103) des Werts (VF1) der ersten physikalischen Größe, die repräsentativ für den Betrieb der motorisierten Antriebsvorrichtung (5) ist, durch die Berechnung der Differenz zwischen dem Wert (VC) eines Verbrauchs elektrischer Energie, der in dem ersten Teilschritt (E102) bestimmt wird, und dem Wert (VS) einer Zufuhr elektrischer Energie, der in dem ersten Teilschritt (E101) bestimmt wird.

3. Betriebssteuerverfahren einer motorisierten Antriebsvorrichtung (5) nach Anspruch 1 oder nach Anspruch 2, **dadurch gekennzeichnet, dass** das Verfahren ferner Folgendes umfasst:
- einen zweiten Bestimmungsschritt (E50) eines Werts (VF2) einer zweiten physikalischen Größe, die repräsentativ für den Betrieb der motorisierten Antriebsvorrichtung (5) ist, und
- einen zweiten Vergleichsschritt (E60) des Werts der zweiten physikalischen Größe mit einem vorbestimmten zweiten Schwellenwert (SV2),
und dass der Entlastungsschritt (E30) auch abhängig von dem Resultat des zweiten Vergleichsschritts (E60) durchgeführt wird.

4. Betriebssteuerverfahren einer motorisierten Antriebsvorrichtung (5) nach Anspruch 3, **dadurch gekennzeichnet, dass** der zweite Bestimmungsschritt (E40) einen ersten Bestimmungsteilschritt (E401) eines Werts für den Ladezustand der Batterie (32) umfasst.

5. Betriebssteuerverfahren einer motorisierten Antriebsvorrichtung (5) nach Anspruch 2 und nach Anspruch 4, **dadurch gekennzeichnet, dass** der erste Bestimmungsteilschritt (E101) eines Werts (VS) einer Zufuhr elektrischer Energie identisch ist mit dem ersten Bestimmungsteilschritt (E401) eines Werts des Ladezustandes der Batterie (32).

6. Betriebssteuerverfahren einer motorisierten Antriebsvorrichtung (5) nach einem der vorhergehenden Ansprüche, wobei die elektronische Steuereinheit (15) eine Vielzahl von elektronischen Schaltern (K1-K6) umfasst, die konfiguriert sind, um dem Elektromotor (16) elektrische Energie zuführen, **dadurch gekennzeichnet, dass** der Entlastungsschritt (E30) ferner einen Steuerungsteilschritt (E301) des Elektromotors (16) gemäß einem vorbestimmten zyklischen Umschaltverhältnis der elektronischen Schalter (K1, K2, K3, K4, K5, K6) umfasst.

7. Betriebssteuerverfahren einer motorisierten Antriebsvorrichtung (5) nach einem der vorhergehenden Ansprüche, wobei der Elektromotor (16) ein Drehstrommotor ist, **dadurch gekennzeichnet, dass** der Entlastungsschritt (E30) dadurch implementiert wird, dass alle drei Phasen des Elektromotors (16) mit Strom versorgt werden, während eine Phase parallel zu den anderen zwei Phasen ist, die in Reihe geschaltet sind.

8. Betriebssteuerverfahren einer motorisierten Antriebsvorrichtung (5) nach einem der Ansprüche 1 bis 6, wobei der Elektromotor (16) ein Dreiphasenmotor ist, **dadurch gekennzeichnet, dass** der Entlastungsschritt (E30) durchgeführt wird, indem zwei Phasen parallel zu dem Elektromotor (16) versorgt werden, während die dritte Phase kurzgeschlossen wird.

9. Betriebssteuerverfahren einer motorisierten Antriebsvorrichtung (5) nach Anspruch 6, **dadurch gekennzeichnet, dass** der Entlastungsschritt (E30) mit einer vorbestimmten Schaltfrequenz der elektronischen Schalter (K1, K2, K3, K4, K5, K6) implementiert wird, wobei die vorbestimmte Frequenz in einem Wertebereich zwischen 10 kHz und 50 kHz ist

10. Motorisierte Antriebsvorrichtung (5) mindestens umfassend:
- eine Versorgungsvorrichtung elektrischer Energie (26),
- einen elektromechanischen Aktuator (11), und
- eine Steuereinheit (12, 13),
die Versorgungsvorrichtung elektrischer Energie (26) mindestens umfassend:
- eine Batterie (32), und
- eine elektrische Energiequelle (25), wobei die elektrische Energiequelle (25) konfiguriert ist, um die Batterie (32) aufzuladen,
der elektromechanische Aktuator (11) mindestens umfassend:
- einen Elektromotor (16), der Elektromotor (16) umfassend eine Vielzahl von Wicklungen (37),
- eine Ausgangswelle (20) und
- eine elektronische Steuereinheit (15),
**dadurch gekennzeichnet, dass** die elektronische Steuereinheit (15) konfiguriert ist, um das Verfahren nach einem der Ansprüche 1 bis 9 durchzuführen.

11. Motorisierte Antriebsvorrichtung nach dem vorhergehenden Anspruch, **dadurch gekennzeichnet, dass** der Elektromotor (16) ein elektronisch kommutierter, bürstenloser Typ ist.

12. Motorisierte Antriebsvorrichtung nach einem der Ansprüche 10 oder 11, **dadurch gekennzeichnet, dass** die Quelle elektrischer Energie (25) ein Solarmodul ist.

## Claims

1. A method for commanding the operation of a motorised drive device (5), the motorised drive device (5) comprising at least:
- an electrical energy supply device (26),
- an electromechanical actuator (11), and
- a command unit (12, 13),
the electrical energy supply device (26) comprising at least:
- a battery (32), and
- an electrical energy source (25), the electrical energy source (25) being configured to charge the battery (32),
the electromechanical actuator (11) comprising at least:
- an electric motor (16), the electric motor (16) comprising a plurality of windings (37),
- an output shaft (20), and
- an electronic control unit (15),
the method comprising at least:
- a first step (E10) of determining a value (VF1) of a first physical quantity representative of the operation of the motorised driving device (5), and
- a first step (E20) of comparing the value of the first physical quantity with a first predetermined threshold value (SV1),
**characterised in that** the method comprises, as a function of the result of the first comparison step (E20), a load-shedding step (E30) in which the windings (37) of the electric motor (16) are supplied with electrical energy from the battery (32), while keeping the output shaft (20) stationary, if the value of the first physical quantity is greater than or equal to the first predetermined threshold value and if no command order is received by the electronic control unit (15) from the command unit (12, 13).

2. The method of commanding the operation of a motorised driving device (5) according to claim 1, **characterised in that** the first determination step (E10) comprises:
- a first sub-step (E101) of determining a value (VS) of an electrical energy input from the electrical energy supply source (26) to the battery (32) during a predetermined period of time (T7),
- a second sub-step (E102) for determining an electrical energy consumption value (VC) of the electromechanical actuator (11) during the predetermined time period
- a third sub-step (E103) for determining the value (VF1) of the first physical quantity representative of the operation of the motorised driving device (5) by calculating the difference between the value (VC) of electrical energy consumption determined in the second sub-step (E102) and the value (VS) of the electrical energy input determined in the first sub-step (E101).

3. The method of commanding the operation of a motorised driving device (5) according to claim 1 or according to claim 2, **characterised in that** the method further comprises:
- a second step (E50) of determining a value (VF2) of a second physical quantity representative of the operation of the motorised driving device (5), and
- a second step (E60) of comparing the value of the second physical quantity with a predetermined second threshold value (SV2),
and **in that** the load-shedding step (E30) is also implemented as a function of the result of the second comparison step (E60).

4. The method of commanding the operation of a motorised driving device (5) according to claim 3, **characterised in that** the second determination step (E40) comprises a first sub-step (E401) of determining a value for the state of charge of the battery (32).

5. The method for commanding the operation of a motorised driving device (5) according to claim 2 and according to claim 4, **characterised in that** the first sub-step (E101) of determining a value (VS) of the electrical energy supply is identical to the first sub-step (E401) of determining a value of the state of charge of the battery (32).

6. The method for commanding the operation of a motorised driving device (5) according to any one of the preceding claims, wherein the electronic control unit (15) comprises a plurality of electronic switches (K1-K6), configured to supply electric power to the electric motor (16), **characterised in that** the load-shedding step (E30) further comprises a sub-step (E301) of controlling the electric motor (16) according to a predetermined switching duty cycle of the electronic switches (K1, K2, K3, K4, K5, K6).

7. The method of commanding the operation of a motorised driving device (5) according to any one of the preceding claims, in which the electric motor (16) is a three-phase motor, **characterised in that** the load-shedding step (E30) is implemented by supplying power to the three phases of the electric motor (16), while one phase is in parallel with the other two phases which are connected in series.

8. The method for commanding the operation of a motorised driving device (5) according to one of claims 1 to 6, in which the electric motor (16) is a three-phase motor, **characterised in that** the load-shedding step (E30) is implemented by supplying two phases in parallel to the electric motor (16), while the third phase is short-circuited.

9. The method of commanding the operation of a motorised driving device (5) according to claim 6, **characterised in that** the load-shedding step (E30) is implemented according to a predetermined switching frequency of the electronic switches (K1, K2, K3, K4, K5, K6), the predetermined frequency being in a range of values between 10kHz and 50kHz.

10. A motorised driving device (5) comprising at least:
- an electrical energy supply device (26),
- an electromechanical actuator (11), and
- a command unit (12, 13),
the electrical energy supply device (26) comprising at least:
- a battery (32), and
- an electrical energy source (25), the electrical energy source (25) being configured to charge the battery (32),
the electromechanical actuator (11) comprising at least:
- an electric motor (16), the electric motor (16) comprising a plurality of windings (37),
- an output shaft (20), and
- an electronic control unit (15),
**characterised in that** the electronic control unit (15) is configured to implement the method according to any of claims 1 to 9.

11. The motorised driving device according to the preceding claim, **characterised in that** the electric motor (16) is of the electronically commutated brushless type.

12. The motorised driving device according to one of claims 10 and 11, **characterised in that** the electrical energy source (25) is a photovoltaic panel.
